(19) **Europäisches Patentamt / European Patent Office / Office européen des brevets**

(11) **EP 1 721 470 B1**

(12) **FASCICULE DE BREVET EUROPEEN**

(45) Date de publication et mention de la délivrance du brevet:
**14.01.2015 Bulletin 2015/03**

(51) Int Cl.:
*H04N 19/169* (2014.01)   *H04N 19/615* (2014.01)
*H04N 19/13* (2014.01)   *H04N 19/63* (2014.01)
*H04N 19/64* (2014.01)   *H04N 19/107* (2014.01)
*H04N 19/61* (2014.01)   *H04N 19/124* (2014.01)

(21) Numéro de dépôt: **05728099.2**

(22) Date de dépôt: **21.02.2005**

(86) Numéro de dépôt international:
**PCT/FR2005/050109**

(87) Numéro de publication internationale:
**WO 2005/086489 (15.09.2005 Gazette 2005/37)**

(54) **PROCEDE DE CODAGE ET DE DECODAGE D'UNE SEQUENCE D'IMAGES PAR ANALYSE TEMPORELLE HIERARCHIQUE**

VERFAHREN ZUM CODIEREN UND DECODIEREN EINER BILDSEQUENZ MITTELS HIERARCHISCHER ZEITLICHER ANALYSE

METHOD OF ENCODING AND DECODING AN IMAGE SEQUENCE BY MEANS OF HIERARCHICAL TEMPORAL ANALYSIS

(84) Etats contractants désignés:
**DE FR GB**

(30) Priorité: **02.03.2004 FR 0450420**

(43) Date de publication de la demande:
**15.11.2006 Bulletin 2006/46**

(73) Titulaire: **Thomson Licensing**
**92130 Issy-les-Moulineaux (FR)**

(72) Inventeurs:
- **FRANCOIS, Edouard**
  **F-35890 BOURG-DES-COMPTES (FR)**
- **BOISSON, Guillaume**
  **F-35000 RENNES (FR)**
- **VIERON, Jérome**
  **35137 BEDEE (FR)**
- **ROBERT, Philippe**
  **F-35235 THORIGNE-FOUILLARD (FR)**
- **MARQUANT, Gwenaëlle**
  **F-35340 LIFFRE (FR)**

(74) Mandataire: **Huchet, Anne et al**
**Technicolor**
**1, rue Jeanne d'Arc**
**92443 Issy-les-Moulineaux Cedex (FR)**

(56) Documents cités:
**WO-A-01/06794     US-A- 5 235 420**

**US-A1- 2003 169 936     US-A1- 2004 008 785**

- **HYUN DUK CHO ET AL: "3-D MEDICAL IMAGE COMPRESSION USING AN ADAPTIVE MODE SELECTION TECHNIQUE IN WAVELET TRANSFORM DOMAIN" PROCEEDINGS OF THE PICTURE CODING SYMPOSIUM, 21 avril 1999 (1999-04-21), pages 91-94, XP008005041**
- **HSU W-L ET AL: "VIDEO COMPRESSION USING ADAPTIVE WAVELET PACKET AND DPCM" PROCEEDINGS OF THE SPIE, SPIE, BELLINGHAM, VA, US, vol. 2605, 1995, pages 158-169, XP000921419 ISSN: 0277-786X**
- **SECKER A ET AL: "Motion-compensated highly scalable video compression using an adaptive 3D wavelet transform based on lifting" PROCEEDINGS 2001 INTERNATIONAL CONFERENCE ON IMAGE PROCESSING. ICIP 2001. THESSALONIKI, GREECE, OCT. 7 - 10, 2001, INTERNATIONAL CONFERENCE ON IMAGE PROCESSING, NEW YORK, NY: IEEE, US, vol. 1 OF 3. CONF. 8, 7 octobre 2001 (2001-10-07), pages 1029-1032, XP010563942 ISBN: 0-7803-6725-1**
- **OHM J-R: "Complexity and Delay Analysis of MCTF Interframe Wavelet Structures" ISO/IEC JTC1/SC29/WG11 MPEG02/M8520, juillet 2002 (2002-07), pages 1-16, XP002282535**

EP 1 721 470 B1

- **JAE-YONG LEE ET AL: "Motion-compensated layered video coding for playback scalability" IEEE TRANSACTIONS ON CIRCUITS AND SYSTEMS FOR VIDEO TECHNOLOGY, IEEE, USA, vol. 11, no. 5, mai 2001 (2001-05), pages 619-628, XP001096941 ISSN: 1051-8215**

## Description

L'invention concerne un procédé de codage et de décodage vidéo d'une séquence d'image codée par analyse temporelle hiérarchique exploitant le filtrage temporel compensé en mouvement.

Le domaine est celui de la compression vidéo basée sur des schémas à échelonnabilité spatiale et/ou temporelle dits aussi « scalables ». Il s'agit par exemple d'un codage en ondelettes 2D+t comportant un filtrage temporel compensé en mouvement.

Dans les standards de codage dits hybrides, tels que MPEG-1, MPEG-2, MPEG-4, h264, comme dans la plupart des schémas de codage sous-bande 2D+t, tels que MC-EZBC acronyme de l'anglais Motion Compensated Embedded Zero Block Context, la première étape de la chaîne de codage consiste à tirer parti de la redondance temporelle entre images successives, avant d'exploiter la redondance spatiale au sein d'une image.

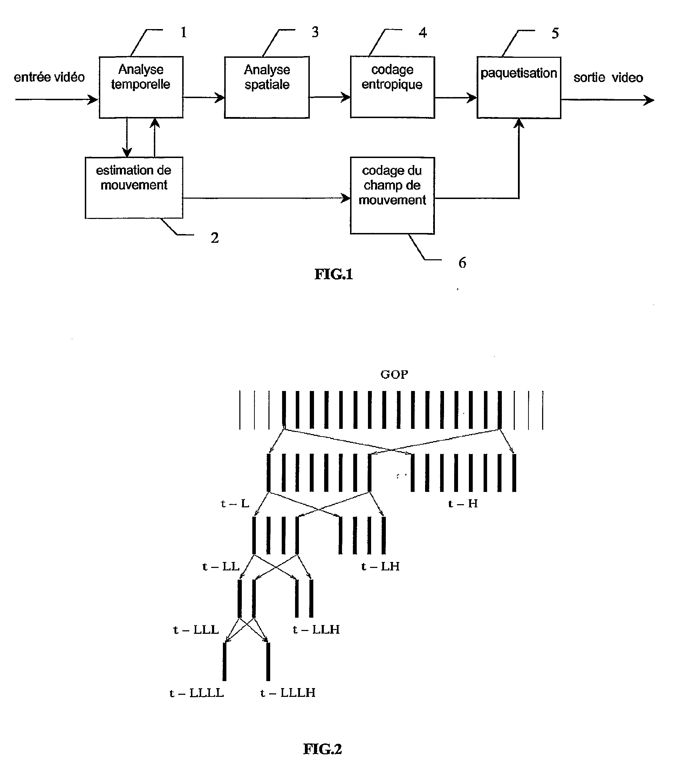

La figure 1 représente un schéma d'un codeur vidéo selon l'art antérieur.

Le signal vidéo est transmis à un circuit d'analyse temporelle 1. Un circuit d'estimation de mouvement 2 est relié à ce premier circuit pour estimer le mouvement entre deux images reçues par le codeur. Les informations de mouvement sont transmises au circuit 1 et à un circuit 6 de codage, par exemple sous forme de champs de vecteurs mouvement. La sortie du circuit 1 est transmise à un circuit d'analyse spatiale 3 qui extrait, de la texture, les coefficients de fréquence de l'image. Ces coefficients sont ensuite quantifiés puis codés par un codage entropique, circuit 4. Ces informations codées et celles de mouvement sont transmises à un circuit de mise en paquets ou paquetiseur 5 qui envoie les données vidéo sous forme de paquets vidéo pour constituer le flux de données vidéo.

Le circuit d'analyse temporelle 1 réalise une prédiction temporelle compensée en mouvement dans le cas d'un schéma hybride ou un filtrage temporel compensé en mouvement dans le cas d'un schéma de codage sous-bande. Les algorithmes de codage avec prédiction temporelle consistent à opérer de la compensation de mouvement pour générer des images de prédiction qui vont servir ultérieurement dans le processus de codage. Ces algorithmes reposent sur le même principe. Les images à coder sont prédites à partir d'une ou plusieurs images précédemment codées, appelées images de référence. C'est le cas dans les standards MPEG vidéo avec les images Prédites (P) et Bi-directionnelles ou Bi-prédites (B). La prédiction consiste à effectuer une compensation de mouvement à partir de ces images de référence et de vecteurs mouvement associés à l'image courante. Ce qui est ensuite codé est le résidu de la prédiction, c'est-à-dire la différence entre l'image courante et l'image de prédiction temporelle. Le mouvement est par exemple décrit par blocs de pixels et la compensation en mouvement effectuée par bloc.

Le circuit d'analyse spatiale 3 réalise une décomposition en ondelettes ou une transformée cosinus discrète. Le codage entropique du circuit 4 peut être un codage de type VLC, acronyme de l'anglais Variable Length Coding, ou un codage de type arithmétique.

Le circuit de paquetisation a pour fonction de découper l'information de texture et de mouvement provenant respectivement du circuit de codage entropique et du circuit de codage des champs de mouvement en sous-ensembles cohérents selon leur fréquence spatiale, temporelle, et leur importance, par exemple leur poids dans une approche de codage par plans de bits. Ainsi le flux binaire obtenu est échelonnable ou "scalable" indépendamment en résolution, en fréquence trame et en fidélité.

Les champs de mouvement estimés correspondent à la résolution de la source. L'étape de compensation en mouvement du codeur, qu'elle soit faite par filtrage ou prédiction est donc exécutée sur des images à pleine résolution tandis qu'au décodeur, l'étape de compensation de mouvement peut être exécutée sur des images de résolution moindre, avec des champs de mouvement remis à l'échelle.

La demande de brevet US 2004/0008785 publiée le 15 janvier 2004 décrit un procédé de codage basé ondelettes qui utilise du filtrage temporel avec compensation en mouvement.

Le but principal du filtrage temporel avec compensation en mouvement, aussi connu sous l'acronyme MCTF, de l'appellation anglaise Motion Compensated Temporal Filtering, est de générer des images haute fréquence H nécessitant le minimum de bits pour le codage. Une autre contrainte est de réduire autant que possible le nombre de pixels non connectés, c'est à dire non reliés par les vecteurs mouvement. Ces deux aspects sont directement dépendant de la qualité du champ de mouvement.

Les informations filtrées sont d'autant plus corrélées que le mouvement exploité pour le filtrage est de bonne qualité.

Dans certains cas, cette qualité de mouvement n'est pas satisfaisante, par exemple si le mouvement est trop complexe, trop important ou s'il y a une coupure de scène. Cela résulte alors en un excès d'énergie dans les images hautes fréquences H et dans un nombre important de pixels non connectés dans les images basse fréquence L, en final en un coût de codage important et une mauvaise répartition de la qualité visuelle au sein du groupe d'images décodées.

L'exploitation de GOP adaptatif permet de prendre en compte ce problème. La taille du GOP est adaptée de manière dynamique en fonction du pourcentage de pixels non connectés. Si le nombre total de pixels non connectés dans une image est supérieur à un seuil prédéfini, par exemple de l'ordre de 60 à 75 %, lors de l'estimation de mouvement effectuée à un niveau de décomposition I, la décomposition temporelle en sous-bandes est arrêtée. Le GOP initial est modifié en taille pour donner deux GOPs, la taille du premier GOP étant automatiquement forcée à $2^l$. Cette solution oblige cependant à avoir des GOPs de taille variable, la gestion de tels GOPs est complexe.

Une autre solution consiste à exploiter d'autres modes de codage tels que le codage en mode intra, lors de la décomposition temporelle. S'il existe un nombre de pixels non connectés important, un codage intra est réalisé. Mais la dynamique des images doit alors être adaptée à celle des images obtenues par filtrage MCTF, entraînant un surcoût de codage. Ceci au détriment des images codées selon le mode MCTF et donc de la qualité globale de la séquence d'images reconstituée.

L'invention a pour but de pallier les inconvénients précités.

Un des objets de l'invention est un procédé de codage d'une séquence d'images comprenant une analyse temporelle hiérarchique d'un groupe d'images réalisant un filtrage temporel compensé en mouvement de paires successives d'images pour fournir des images de fréquence temporelle basse et des images de fréquence temporelle haute à différents niveaux de décomposition temporelle, cette analyse réalisant, pour un niveau de décomposition temporelle donné et pour une paire d'images de fréquence temporelle basse, une étape d'estimation de mouvement d'une image courante B vers une image précédente de référence A pour fournir des vecteurs mouvement puis un filtrage temporel compensé en mouvement de ces images pour fournir une image de fréquence temporelle basse (L) et une image de fréquence temporelle haute (H) d'un niveau de décomposition supérieur, le dit filtrage temporel étant remplacé par un codage en mode intra pour obtenir au moins une image de fréquence basse (L) ou haute (H) si l'image courante a un niveau de corrélation avec une image précédente inférieur à un seuil, les images obtenues de fréquence basse (L) étant alors mises à l'échelle pour être adaptées, au niveau énergétique, aux images obtenues par le dit filtrage temporel compensé en mouvement, caractérisé en ce que, parmi l'image basse fréquence et les images haute fréquence finales décomposées obtenues en fin d'analyse :

-   il sélectionne les images obtenues par un codage intra d'une image du niveau de décomposition inférieur avec la condition supplémentaire, pour les images haute fréquence, que cette image provient elle-même d'un codage intra.

-   il calibre l'image sélectionnée en effectuant au moins une étape inverse de l'étape de mise à l'échelle.

Le nombre d'étape inverses effectuées correspond au nombre de codages intra successifs d'une image basse fréquence (L) pour arriver à l'image sélectionnée s'il s'agit d'une image sélectionnée haute fréquence, ce nombre étant incrémenté de un s'il s'agit de l'image sélectionnée basse fréquence (L).

Selon une mise en oeuvre particulière, le procédé comporte, pour le calcul d'une image fréquence basse L ou haute H, un filtrage temporel entre l'image courante et une image suivante de la paire d'images suivante, si la corrélation entre l'image courante et l'image précédente est inférieure à un seuil et si la corrélation entre l'image courante et cette image suivante est supérieure à un seuil, l'autre image H ou L étant obtenue par codage intra et en ce que cette opération de filtrage est assimilée au codage intra et non pas au filtrage temporel pour l'étape de sélection.

Selon une mise en oeuvre particulière, le procédé affecte à chaque image du groupe d'images un numéro d'image, il effectue un suivi de ces images numérotées lors de la décomposition en attribuant un compteur pour chaque numéro, ce compteur étant actualisé à chaque étape,

-   le compteur est incrémenté chaque fois qu'une image de fréquence basse (L) est obtenue en mode intra,

-   le compteur est inchangé chaque fois qu'une image de fréquence haute (H) est obtenue en mode intra ou lors d'un filtrage temporel avec une image suivante,

-   le compteur est remis à zéro chaque fois qu'une image est obtenue par filtrage temporel compensé en mouvement, avec une image précédente.

L'invention concerne également un procédé de décodage d'une séquence d'images codées selon le procédé précédemment décrit, caractérisé en ce qu'il effectue une étape de calibrage inverse d'images sélectionnées à décoder, la sélection des images et le nombre d'étapes inverses étant fonction d'une information associée à l'image à décoder. Cette information est par exemple la valeur du compteur affecté à l'image lors du codage.

Grâce à cette opération inverse de mise à l'échelle des images de type intra, les images codées selon le mode MCTF ne sont pas pénalisées. La répartition de la qualité des images sur l'ensemble d'un GOP comportant à la fois des images codées en intra ou selon le mode MCTF est améliorée. Les informations de mode de codage transmises au décodeur permettent de recalibrer les images intra pour effectuer la synthèse des images.

Le filtrage temporel étant réalisé de manière conditionnelle, selon la qualité du mouvement, la décomposition temporelle en sous-bandes peut être effectuée jusqu'au dernier niveau. Quelque soit la qualité du mouvement, la structure du GOP est conservée. La taille des GOPs peut être maintenue constante, facilitant la gestion de débit et de traitement, même si une coupure de scène a lieu au milieu d'un GOP. Si l'on exploite des GOPs de taille variable, la qualité d'image est améliorée.

D'autres particularités et avantages de l'invention ressortiront mieux dans la description suivante donnée à titre d'exemple non limitatif et faite en regard des figures annexées qui représentent :

- la figure 1 un schéma de codage selon l'art antérieur,
- la figure 2, un filtrage temporel compensé en mouvement, sur un GOP de 16 images,
- la figure 3, un circuit de codage,
- la figure 4, un organigramme de codage,
- la figure 5, un circuit de décodage.

La figure 2 représente de manière synthétique les opérations de filtrage temporel compensé en mouvement réalisées par le circuit d'analyse temporelle 4, avec une décomposition à 4 niveaux pour des GOPs comportant, dans cet exemple, 16 images représentées en traits gras.

Le mode de filtrage utilisé est appelé « lifting ». Au lieu d'utiliser un filtrage complexe pour le codage en ondelettes, exploitant un filtre linéaire de longueur importante, dans notre exemple le filtrage serait effectué sur un groupe de 16 images, ce procédé de filtrage consiste, de manière connue, à « factoriser » le filtre en exploitant des filtres de longueur limitée, par exemple deux si l'on choisit de filtrer les échantillons deux à deux, ce filtrage étant reconduit pour chaque niveau de décomposition. On considère donc le cas où le filtrage dans le sens du mouvement est effectué sur des paires d'images. Le filtrage basse fréquence et haute fréquence, sur chacune des paires du GOP, produit respectivement, au premier niveau de décomposition temporelle, 8 images de fréquence temporelle basse (t-L) et 8 images de fréquence temporelle haute (t-H).

Les images de fréquence temporelle basse sont ensuite décomposées à nouveau selon le même procédé. Le filtrage passe bas de ces images fournit 4 nouvelles images de fréquence temporelle basse t-LL et le filtrage passe-haut de ces mêmes images fournit 4 images de fréquence temporelle haute t-LH. Le troisième niveau de décomposition fournit 2 images de fréquence temporelle basse t-LLL et 2 images de fréquence temporelle haute t-LLH. Le quatrième et dernier niveau fournit une image de fréquence temporelle basse t-LLLL et une image de fréquence temporelle haute t-LLLH.

Cette décomposition temporelle est une décomposition 5 bandes temporelles qui génère donc 1 image t-LLLL, 1 image t-LLLH, 2 images t-LLH, 4 images t-LH, et 8 images t-H par GOP de 16 images. Les images t-L, t-LL, t-LLL et bien sûr les images originales sont ignorées pour le codage en aval puisqu'elles sont à l'origine de la décomposition en sous-bandes pour fournir les images décorrélées à chaque niveau. Cette décomposition permet donc une nouvelle répartition de l'énergie en générant une image utile de fréquence temporelle basse t-LLLL, qui représente une moyenne de l'ensemble du GOP et dans laquelle est concentrée l'énergie, et quatre niveaux d'images de fréquence temporelle haute de faible énergie, soit 5 bandes de fréquence. Ce sont ces images qui sont transmises au circuit d'analyse spatiale pour une décomposition spatiale en sous-bandes.

Pour réaliser les filtrages, un champ de mouvement est estimé entre chaque paire d'images à filtrer et cela pour chaque niveau. C'est la fonction de l'estimateur de mouvement 7.

D'une manière pratique, seul un champ de vecteurs mouvement est calculé, de A vers B ou de B vers A. L'autre champ de vecteurs mouvement est déduit du premier, générant des pixels non connectés, c'est à dire non affectés d'un vecteur mouvement et correspondant à des trous dans le champ de vecteurs mouvement inverse.

L'opération de filtrage est effectuée sur chaque paire d'image du GOP original, pour obtenir un premier niveau de résolution temporelle. Le processus est répété plusieurs fois sur les images résultantes de la bande de fréquence temporelle basse, pour obtenir les niveaux de résolution temporelle suivants. Dans le cas d'un GOP de 16 images, le processus génère 8 bandes de fréquence temporelle appelées L, H, LL, LH, LLL, LLH, LLLL, LLLH.

Comme indiqué plus haut, le problème de pixels non connectés se traduit par une moins bonne décorrélation lors du filtrage temporel et donc une moins bonne compression des données. Il peut se produire à chacun des niveaux de décomposition du GOP où une estimation de mouvement est effectuée.

Selon un mode de réalisation de l'invention, un circuit de commutation du mode est mis en oeuvre pour contrôler l'analyse temporelle, circuit commandé par la pertinence de l'estimation de mouvement. Il permet de gérer le cas où un nombre important de pixels non connectés est obtenu lors de l'estimation de mouvement.

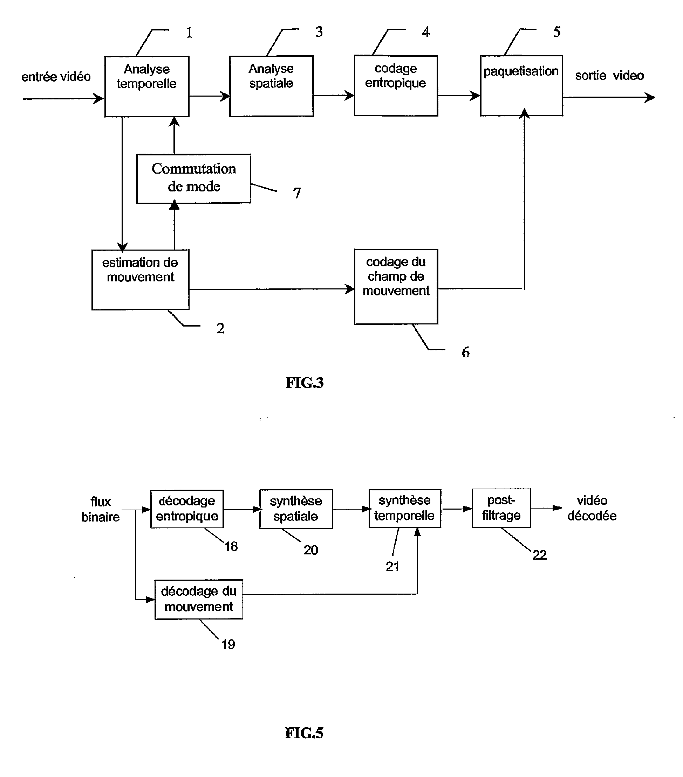

La figure 4 représente un dispositif avec un tel circuit. Les mêmes références sont utilisées pour désigner les circuits semblables à ceux de la figure 1 qui ne sont donc pas décrits à nouveau.

Les informations de mouvement provenant du circuit d'estimation de mouvement référencé 2 sont transmises à un circuit de commutation de mode référencé 7. Ce circuit est relié au circuit d'analyse temporelle 1 pour lui transmettre les informations de mouvement et les informations sur le mode de codage à exploiter.

La figure 4 représente un organigramme simplifié de l'algorithme mis en oeuvre pour le fonctionnement du circuit de commutation.

Soit A et B deux images successives d'un niveau de décomposition temporelle donné, disponibles à l'étape référencée 7. Le mouvement est par exemple estimé de l'image B vers l'image A et l'image A est donc l'image de référence. Une étape référencée 8 effectue une estimation de mouvement de cette image B vers l'image A. L'étape suivante 9 réalise un calcul du pourcentage P1 de pixels non connectés dans l'image de référence A par rapport au nombre de pixels de l'image, c'est à dire le nombre de pixels auxquels aucun vecteur mouvement n'est affecté. L'étape suivante référencée 10 effectue une comparaison de ce pourcentage P1 à un seuil S1 qui est une valeur prédéfinie. Cette valeur est par exemple un pourcentage de l'ordre de 20 à 25 %.

Si le nombre de pixels non connectés est inférieur ou égal à cette valeur, le champ de vecteurs mouvement est considéré comme correct et la prochaine étape est l'étape 11 qui effectue un filtrage de manière classique.

Les images de fréquence basse et haute sont ainsi calculées :

$$\begin{cases} H = \dfrac{\bar{B} - MC_{A \leftarrow B}(A)}{\sqrt{2}} \\ L = \sqrt{2}.A + MC_{A \leftarrow B}^{-1}(H) \end{cases}$$

Ce filtrage, équivalent à celui précédemment décrit, consiste à calculer d'abord l'image H. Cette image est obtenue par différence point à point de l'image B et de l'image A compensée en mouvement. Ainsi, on retranche à un pixel de B une certaine valeur, interpolée le cas échéant, pointée par le vecteur déplacement dans A, vecteur mouvement calculé lors de l'estimation de mouvement de l'image B vers l'image A.

L'image L est ensuite déduite à partir de l'image H et non plus de l'image B, par addition de l'image A à l'image H compensée en mouvement inverse.

$MC_{A \leftarrow B}^{-1}(H)$ correspond à une « décompensation » en mouvement de l'image (H). Ainsi, on ajoute, à un pixel de A, une certaine valeur, interpolée le cas échéant, située, dans l'image H, à la base d'un vecteur déplacement de B vers A et pointant le pixel de A.

Si le pourcentage de pixels non connectés est supérieur au seuil S1, le champ de vecteurs mouvement est considéré comme non pertinent et l'étape 12 succède à l'étape 10.

S'il existe, au niveau temporel traité, une image C postérieure à l'image B, test effectué à l'étape 12, cette image C devient une nouvelle image de référence possible et le mouvement est estimé de l'image B vers l'image C, étape 13.

S'il n'y a pas d'image postérieure à l'image B au niveau courant traité, c'est l'étape 17 qui succède à l'étape 12. Cette étape code les images B et A en mode intra avec le facteur d'échelle approprié pour l'image A.

$$\begin{cases} H = B \\ L = \sqrt{2}.A \end{cases}$$

L'étape 14, qui succède à l'étape 13, réalise un calcul de pourcentage P2 de pixels non connectés dans l'image C pour le champ de vecteurs mouvement calculé entre B et C.

L'étape suivante 15 effectue une comparaison de ce pourcentage P2 à un seuil S2 qui est une valeur prédéfinie. Cette valeur est par exemple un pourcentage de l'ordre de 20 à 25 %.

Si le nombre de pixels non connectés est inférieur ou égal à cette valeur, le champ de vecteurs mouvement est considéré comme correct et la prochaine étape est l'étape 16 qui effectue un filtrage de manière classique mais avec cette image C. Il s'agit du mode « prédiction différée » (backward prédiction). Les images de fréquence basse et haute sont ainsi calculées :

$$\begin{cases} H = \dfrac{B - MC_{B \rightarrow C}(C)}{\sqrt{2}} \\ L = \sqrt{2}.A \end{cases}$$

L'information de l'image A se trouve ainsi dans l'image L et l'énergie de l'image H est réduite en prenant cette référence dans le futur pour le filtrage plutôt qu'en choisissant simplement l'image B ou en la filtrant à partir d'une image précédente non corrélée. On obtient ainsi une image haute fréquence de basse énergie.

Si le pourcentage de pixels non connectés est inférieur au seuil S2, l'étape 17 succède à l'étape 12.. Cette étape 17 code les images B et A en mode intra avec le facteur d'échelle approprié pour l'image A, comme dans le mode MCTF ou le mode de prédiction différée précédent.

$$\begin{cases} H = B \\ L = \sqrt{2}.A \end{cases}$$

L'inverse est bien sûr possible qui consiste à prendre l'image A comme image haute fréquence (H=A) et l'image B comme image basse fréquence. On pourrait par exemple choisir, pour L, l'image possédant le moins d'énergie.

Les étapes 11, 16 et 17 sont donc les modes de codage déterminés par le circuit de commutation de mode, informations transmises au circuit d'analyse temporelle.

Le choix du mode est ici effectué pour l'image complète. Il est bien sûr tout aussi envisageable de faire une sélection du mode pour chacun des blocs ou macroblocs de l'image.

Le terme √2, appelé facteur d'échelle, relatif par exemple aux images L « réelles », c'est à dire obtenues par un filtrage MCTF, est dû au filtrage MC lift. Ce facteur d'échelle, également attribué au codage en mode intra des images A, permet d'avoir la même valeur énergétique au niveau des images et vise à faciliter la mise en correspondance lors de l'estimation de mouvement pour le prochain niveau temporel, les images étant alors homogènes en termes d'énergie.

L'étape de filtrage élémentaire décrite ci-dessus est réalisée pour chaque couple d'image d'un niveau temporel donné et cela pour chaque niveau temporel jusqu'au niveau au sommet de la pyramide temporelle du GOP, quelque soit la pertinence des champs de vecteur mouvement, quelque soit le mode. Ceci permet de ne pas être affecté par de fausses coupures de scène, correspondant par exemple à un déplacement rapide de la caméra, découvrant des zones jusqu'alors cachées.

A la fin du procédé, les images A ou B qui ont été codées en mode intra à un niveau donné de décomposition et qui n'ont pas servi d'image de référence ou de prédiction pour le mode MCTF ou pour le mode de prédiction différée aux niveaux de décomposition temporelle suivants, sont remises à l'échelle pour correspondre au dernier niveau pour lequel ses pixels ont été exploités pour ces modes :

$$F_i' = F_i \Big/ \sqrt{2}^{\,n(F_i)}$$

$F_i$ est l'image L ou H résultant du filtrage de l'image A et B et $F'_i$ cette image $F_i$ remise à l'échelle.

L'exposant n à appliquer au facteur d'échelle est donné en fonction du mode, par les formules suivantes :

- mode MCTF

$$\begin{cases} n(L) = 0 \\ n(H) = 0 \end{cases}$$

- mode Prédiction ou mode de codage intra:

$$\begin{cases} n(L) = n(A) + 1 \\ n(H) = n(B) \end{cases}$$

La valeur de n est ainsi calculée, pour une image L ou H à un niveau de décomposition donnée, en fonction de la valeur de n attribuée à l'image A ou B du niveau de décomposition précédent, utilisée respectivement pour le calcul de L ou H.

Ainsi, si les images A et B sont traitées selon le mode MCTF pour donner les images L et H, *alors,* quel que soit leur niveau n(A) et n(B), le niveau n attribué à ces images L et H est forcé à zéro.

Si le mode prédiction ou intra est utilisé pour donner les images L et H à partir des images A et B, affectées du niveau n(A) et n(B), le niveau de l'image L est celui n(A) incrémenté de un et le niveau de l'image H est celui de l'image B, n(B).

En se référant à la figure 2, si l'on considère une coupure de scène après la quatrième image du GOP menant à un codage en intra effectué pour la première fois au troisième niveau de décomposition pour les deux images t-LLL puis au quatrième et dernier niveau, la valeur de n(L) est égale à 2 pour l'image t-LLLL et la valeur de n(H) est égale à 1 pour l'image t-LLLH. Ainsi, en divisant deux fois l'image t-LLLL par le facteur d'échelle, on retrouve l'image t-LL qui correspond au dernier niveau auquel cette image est utilisée pour le mode MCTF.

Il est possible d'affecter un numéro à chacune des images originales du GOP. Des numéros sont ensuite attribués aux images décomposées, un filtrage d'une image A numérotée s avec une image B numérotée t donnant une image de basse fréquence numérotée s, L correspondant à A, et une image de haute fréquence numérotée t, H correspondant à B. Par exemple, les numéros obtenus pour les images des niveaux t-LLLL, t-LLLH, t-LLH sont 1, 9, 5 et 13. Pour chaque niveau de décomposition, le calcul de n pour une image numérotée i consiste alors en une incrémentation du niveau n affecté à l'image i du niveau précédent dans le cas où cette image subit un codage intra ou prédictif pour donner une image basse fréquence L. Le compteur est inchangé dans le cas où cette image subit un codage intra ou prédictif pour donner une image haute fréquence H. Le compteur est remis à zéro dans le cas ou cette image subit un codage MCTF. La valeur n attribuée à chaque image originale du GOP est initialisée à zéro. Le calcul se fait à chaque niveau de décomposition jusqu'au dernier niveau.

En fait, la valeur n attribuée à une image décomposée correspond :

- pour une image finale obtenue par filtrage MCTF, à la valeur zéro,
- pour une image finale basse fréquence obtenue par codage intra, au nombre de codages intra réalisés sur l'image de même numéro aboutissant à cette image basse fréquence, incrémenté de un,
- pour une image haute fréquence obtenue par codage intra, au nombre de codages intra successifs réalisés sur l'image de même numéro aboutissant à cette image haute fréquence,
- pour une image haute fréquence obtenue par filtrage temporel avec une image suivante, au nombre de codages intra successifs réalisés sur l'image de même numéro, incrémenté de un, aboutissant à l'image objet de ce filtrage temporel.

Cette dernière étape de remise à l'échelle vise à calibrer la dynamique des images transformées qui ne sont pas des sous-bandes temporelles «réelles», c'est à dire des images de sous-bande obtenues par filtrage temporel MCTF, en diminuant le poids de ces images.

L'image sous-bande calibrée est une image qui n'est pas exploitée pour la synthèse des deux images A et B, raison pour laquelle son coût est réduit.

L'allocation de débit est réalisée par le paquetiseur 5. L'orthogonalité de la transformée temporelle, et également sa normalisation, sont des points essentiels pour que l'allocation de débit soit optimale parmi les différentes images. Ce qui est réalisé de façon naturelle lors d'un filtrage temporel MCTF normalisé pourrait devenir un problème lorsque d'autres modes tels que le mode de prédiction différée ou le mode de codage en intra sont mis en oeuvre. Si, dans une étape de codage, une image de fréquence basse est obtenue, en mode intra ou prédictif, en multipliant l'image A par un facteur d'échelle pour atteindre la dynamique du niveau temporel, c'est à dire pour d'obtenir une image de même énergie que les images obtenues par filtrage MCTF, cette pondération n'est plus souhaitable au niveau de l'allocation de bits. Au contraire, un soin particulier doit être pris pour favoriser les images de fréquence basse « réelles » obtenues par filtrage MCTF, les images de référence pertinentes, par exemple en donnant moins de poids aux images codées en mode intra ou prédictif. En effet, les images de fréquence basse réelles, comme on va le voir ci-après, sont exploitées au décodeur pour la reconstruction des deux images A et B au niveau inférieur de décomposition, selon la pyramide hiérarchique, B étant fonction de A, ce qui n'est pas le cas pour les images codées en mode intra ou prédictif.

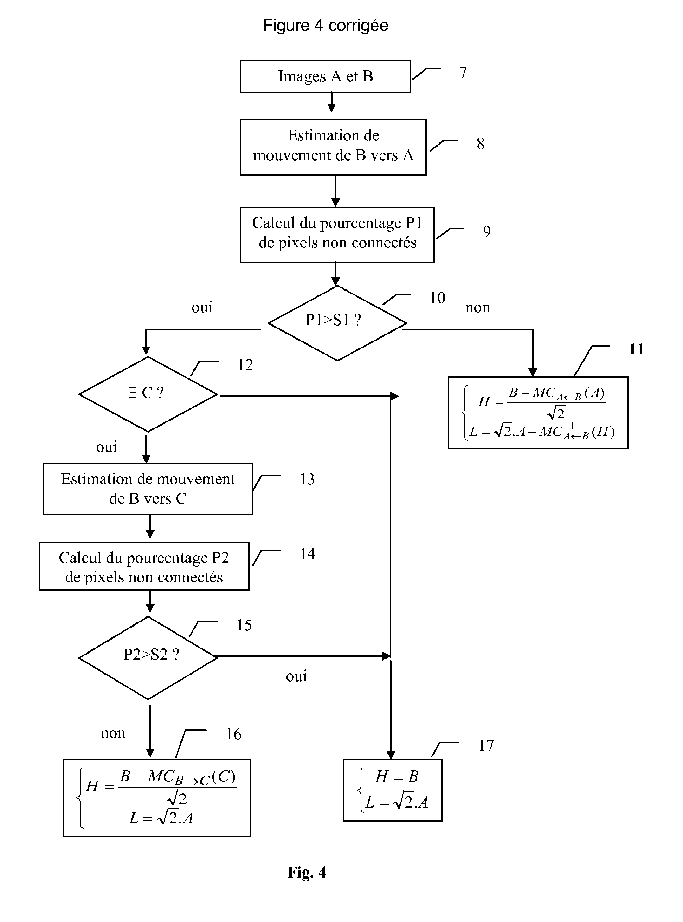

L'invention concerne également un décodeur exploitant les données codées selon le procédé précédemment décrit. La figure 5 représente un tel décodeur.

Le flux binaire correspondant aux images codées selon le procédé précédemment décrit sont transmises à l'entrée du décodeur. Elles sont transmises en parallèle à l'entrée d'un circuit de décodage entropique 18 et à l'entrée d'un circuit de décodage du mouvement 19. Le circuit de décodage entropique est relié successivement à un circuit de synthèse spatiale 20 et à un circuit de synthèse temporelle 21. Ce dernier circuit reçoit des informations de mouvement du circuit de décodage du mouvement. La sortie du circuit de synthèse temporelle est reliée à l'entrée d'un circuit de post-filtrage 22 dont la sortie est la sortie du décodeur.

Le train binaire est donc traité par le circuit de décodage entropique 18 qui réalise les opérations inverses du circuit de codage entropique au codeur et décode les coefficients ondelettes spatio-temporels et les modes de filtrage.

Le circuit de décodage du mouvement 19 récupère dans le flux et décode les informations relatives au mouvement pour transmettre au circuit 21 les champs de mouvement nécessaires à la synthèse temporelle.

Le circuit de synthèse spatiale 20 reconstruit les images correspondant aux différentes sous-bandes temporelles. Les images sous-bandes reconstruites sont ensuite mises à l'échelle à partir du facteur d'échelle approprié, pour effectuer la synthèse temporelle. Cette mise à l'échelle se fait en fonction des informations de mode transmises et relatives aux images utilisées lors de la décomposition du GOP original, au codeur, permettant d'attribuer les valeurs de n aux différentes images.

$$F_i = F_i'.\sqrt{2}^{\,n(F_i)}$$

Ensuite, le circuit de synthèse temporelle 21 reconstruit les images transformées jusqu'au niveau temporel souhaité, selon leur mode :

- mode MCTF

$$\begin{cases} A = \dfrac{L - MC_{A \leftarrow B}^{-1}(H)}{\sqrt{2}} \\ B = \sqrt{2}.H + MC_{A \leftarrow B}(A) \end{cases}$$

- mode de prédiction backward

$$\begin{cases} A = L / \sqrt{2} \\ B = \sqrt{2}.H + MC_{B \rightarrow C}(C) \end{cases}$$

- mode de codage intra

$$\begin{cases} A = L / \sqrt{2} \\ B = H \end{cases}$$

Les informations de mouvement nécessaires à la compensation de mouvement proviennent du circuit de décodage du mouvement. Le circuit de synthèse temporelle réalise un décodage en fonction de l'information de mode de codage affectée à l'image à décoder.

Les images en sortie du circuit 21 sont donc reconstruites par synthèse temporelle à partir des coefficients ondelettes temporels. Une étape finale de post-traitement est appliquée par le circuit de post filtrage 22 en réalisant un filtrage sur l'image permettant de réduire les artefacts de type effets de bloc.

Le pourcentage P1 et/ou P2 utilisé pour déterminer le mode de commutation est choisi de l'ordre de 20 à 25%. Ce pourcentage a été obtenu de manière empirique et d'autres valeurs peuvent bien sûr être exploitées pour la mise en oeuvre du procédé de commutation.

Le mouvement exploité pour le filtrage temporel d'une paire d'images peut être obtenu par simplification ou élaguage, plus connu sous l'appellation anglaise de « pruning », du champ de vecteurs mouvement calculé par l'estimation de mouvement, permettant de limiter le coût de codage du mouvement.

Une variante de l'invention consiste à combiner une structure de GOP adaptatif au procédé précédemment décrit. La taille du GOP est alors variable, dépendant par exemple de paramètres tels que le mouvement dans la séquence.

L'invention s'applique aussi bien à un circuit d'analyse temporelle de type hybride que de type codage sous-bande.

Les applications de l'invention concernent la compression vidéo avec prédiction temporelle.

## Revendications

1. Procédé de codage d'une séquence d'images comprenant une analyse temporelle hiérarchique (1) d'un groupe d'images réalisant un filtrage temporel compensé en mouvement de paires successives d'images (11) pour fournir des images de fréquence temporelle basse et des images de fréquence temporelle haute à différents niveaux de décomposition temporelle, cette analyse réalisant, pour un niveau de décomposition temporelle donné et pour une paire d'images de fréquence temporelle basse, une étape d'estimation de mouvement (8) d'une image courante B vers une image précédente de référence A pour fournir des vecteurs mouvement puis un filtrage temporel compensé en mouvement (11), dit filtrage en mode MCTF, desdites images A et B pour fournir une image de fréquence temporelle basse (L) et une image de fréquence temporelle haute (H) d'un niveau de décomposition supérieur, ledit procédé comprenant l'étape suivante :

   - si l'image courante B a un niveau de corrélation avec la dite image précédente A inférieur à un seuil (10,15), remplacer ledit filtrage temporel par un mode intra défini tel que l'image haute fréquence est égale à l'image B et l'image basse fréquence est égale à l'image A ou inversement, ladite image de fréquence basse (L) obtenue étant alors mise à l'échelle, lors d'une première étape de mise à l'échelle, pour être adaptée, au niveau énergétique, aux images obtenues par ledit filtrage temporel compensé en mouvement, ledit procédé étant **caractérisé en ce que**, parmi l'image basse fréquence et les images haute fréquence finales décomposées obtenues en fin d'analyse :
   - il sélectionne les images de fréquence basse (L) et haute (H) obtenues selon le mode intra à partir d'une image du niveau de décomposition inférieur avec la condition supplémentaire, pour les images haute fréquence, que cette image ait été obtenue selon le mode intra;
   - il remet à l'échelle les images sélectionnées en effectuant au moins une étape inverse de la première étape de mise à l'échelle, pour leur codage.

2. Procédé selon la revendication 1, **caractérisé en ce que** le nombre d'étapes inverses effectuées correspond au nombre de fois successive où une image basse fréquence (L) est obtenue selon le mode intra pour arriver à l'image sélectionnée s'il s'agit d'une image sélectionnée haute fréquence, ce nombre étant incrémenté de un s'il s'agit d'une image sélectionnée basse fréquence (L).

3. Procédé selon la revendication 1, **caractérisé en ce qu'**il comporte, pour le calcul d'une image fréquence haute H d'un niveau temporel donné, un filtrage temporel entre l'image courante B et une image suivante C (16) de la paire d'images suivante de même niveau temporel, si la corrélation entre l'image courante et l'image précédente est inférieure à un seuil (10) et si la corrélation entre l'image courante et cette image suivante est supérieure à un seuil (15), l'image fréquence basse L du niveau temporel donné étant obtenue selon le mode intra (16).

4. Procédé selon la revendication 1, **caractérisé en ce qu'**il affecte à chaque image du groupe d'images un numéro d'image s, **en ce qu'**il effectue un suivi de ces images numérotées lors de la décomposition en attribuant un compteur pour chaque numéro, le compteur, dit compteur courant, attribué à l'image de numéro s pour un niveau de décomposition courant étant calculé comme suit:

   - ledit compteur courant est calculé par incrémentation du compteur affecté à l'image de numéro s du niveau de décomposition précédent quand une image de fréquence basse (L) de numéro s est obtenue selon le mode intra,
   - ledit compteur courant est inchangé quand une image de fréquence haute (H) de numéro s est obtenue selon le mode intra ou par un filtrage temporel avec une image suivante,
   - le compteur attribué au numéro s est remis à zéro chaque fois qu'une image de numéro s est obtenue par filtrage temporel compensé en mouvement de ladite l'image de numéro s du niveau de décomposition précédent avec une image précédente,
   les étapes inverses étant effectuées en fonction de la valeur des compteurs.

5. Procédé selon la revendication 1, **caractérisé en ce que** les images de fréquence haute H et de fréquence basse L sont obtenues, lors du filtrage temporel compensé en mouvement de deux images successives A et B à partir des opérations suivantes :

$$\begin{cases} H = \dfrac{B - MC_{A \leftarrow B}(A)}{\sqrt{2}} \\ L = \sqrt{2}.A + MC_{A \leftarrow B}^{-1}(H) \end{cases}$$

MC correspondant à la compensation en mouvement selon le champ de vecteurs de B vers A, de l'image A ou H.
et **en ce que** les images L et H sont obtenues si l'image courante B a un niveau de corrélation avec ladite image A inférieur à un seuil, selon le mode intra par les formules suivantes :

$$\begin{cases} H = B \\ L = \sqrt{2}.A \end{cases}$$

**6.** Procédé selon la revendication 3, **caractérisé en ce que** les images H et L sont obtenues à partir de l'image courante B et d'une image C postérieure à B de même niveau temporel si la corrélation entre l'image courante et ladite image suivante est supérieure à un seuil selon les formules suivantes :

$$\begin{cases} H = \dfrac{B - MC_{B \to C}(C)}{\sqrt{2}} \\ L = \sqrt{2}.A \end{cases}$$

MC correspondant à la compensation en mouvement de l'image C selon le champ de vecteurs de B vers C.

**7.** Procédé selon la revendication 1, **caractérisé en ce que** les images calibrées obtenues par analyse temporelle (1) sont ensuite traitées par analyse spatiale (3).

**8.** Procédé selon la revendication 1, **caractérisé en ce que** le niveau de corrélation est calculé en prenant en compte le nombre de pixels connectés, c'est à dire reliés par un vecteur de mouvement.

**9.** Procédé de décodage d'une séquence d'images codées selon le procédé de la revendication 1 en un flux, **caractérisé en ce qu'**il comporte une étape de décodage entropique (18) pour décoder des modes de filtrage et des coefficients d'ondelette, une étape de décodage d'informations de mouvement, une synthèse spatiale (20) à partir desdits coefficients d'ondelette pour obtenir des images de fréquence temporelle basse et des images de fréquence temporelle haute à différents niveaux de décomposition temporelle, au moins une étape de mise à l'échelle pour des images sélectionnées parmi les images de fréquence haute et de fréquence basse et une étape de synthèse temporelle (21) en fonction desdits modes de filtrage décodés et desdites informations de mouvement décodées à partir des images de fréquence haute et de fréquence basse après mise à l'échelle, **caractérisé en ce que** ladite mise à l'échelle comprend les étapes suivantes :

- sélectionner les images de fréquence temporelle basse (L) et haute (H) obtenues, lors du procédé de codage de la revendication 1, à partir d'une image du niveau de décomposition inférieur selon le mode intra dudit procédé de codage de la revendication 1, avec la condition supplémentaire, pour les images haute fréquence, que cette image provient elle-même dudit mode intra;
- mise à l'échelle les images sélectionnées en effectuant au moins une étape inverse de l'étape de remise à l'échelle effectuée par le procédé de codage.

**10.** Procédé selon la revendication 9, **caractérisé en ce que** le nombre d'étapes inverses effectuées correspond au nombre de fois successive où une image basse fréquence (L) est obtenue selon le mode intra pour arriver à l'image sélectionnée s'il s'agit d'une image sélectionnée haute fréquence, ce nombre étant incrémenté de un s'il s'agit d'une image sélectionnée basse fréquence (L).

**Patentansprüche**

**1.** Verfahren zum Codieren einer Bildsequenz, umfassend eine hierarchische zeitliche Analyse (1) einer Bildgruppe unter Vornahme einer bewegungskompensierten zeitlichen Filterung von aufeinanderfolgenden Bildpaaren (11), um Bilder von niedriger Zeitfrequenz und Bilder von hoher Zeitfrequenz mit unterschiedlichen zeitlichen Zerlegungsebenen zu liefern, wobei diese Analyse für eine gegebene zeitliche Zerlegungsebene und für ein Bilderpaar von niedriger Zeitfrequenz eine Bewegungsschätzungsphase (8) eines laufenden Bildes B in Richtung eines vorherigen Referenzbildes A durchführt, um Bewegungsvektoren, dann eine bewegungskompensierte zeitliche Filterung (11), sogenannte Filterung im MCTF-Modus, von besagten Bildern A und B zu liefern, um ein Bild von niedriger Zeitfrequenz (L) und ein Bild von hoher Zeitfrequenz (H) einer höheren Zerlegungsebene zu liefern, wobei das besagte Verfahren den folgenden Schritt umfasst:

- wenn das aktuelle Bild B einen Korrelationsgrad mit dem besagten vorhergehenden Bild A unterhalb einer Schwelle (10, 15) hat, die besagte zeitliche Filterung durch einen festgelegten Intra-Modus ersetzen, dergestalt, dass das Hochfrequenzbild gleich dem Bild B ist und das Niedrigfrequenzbild gleich dem Bild A ist oder umgekehrt, wobei das besagte erhaltene Niedrigfrequenzbild (L) dann skaliert wird, während eines ersten Skalierungsschritts, um energetisch an die Bilder angepasst zu werden, die durch die besagte bewegungskompensierte zeitliche Filterung erhalten werden, wobei besagtes Verfahren **dadurch gekennzeichnet ist, dass** es unter dem Niedrigfrequenzbild und den zerlegten endgültigen Hochfrequenzbildern, die am Ende der Analyse erhalten werden:

- die erhaltenen Niedrigfrequenzbilder (L) und Hochfrequenzbilder (H) auswählt, die nach dem Intra-Modus von einem Bild der unteren Zerlegungsebene erhalten wurden, mit der zusätzlichen Bedingung für die Hochfrequenzbilder, dass dieses Bild nach dem Intra-Modus erhalten wurde;

- die ausgewählten Bilder neu skaliert, indem mindestens ein Schritt durchgeführt wird, der umgekehrt zum ersten Skalierungsschritt ist, für deren Codierung.

2. Verfahren nach Anspruch 1, **dadurch gekennzeichnet, dass** die Anzahl durchgeführter umgekehrter Schritte der Anzahl von aufeinanderfolgenden Malen entspricht, wo ein Niedrigfrequenzbild (L) nach dem Intra-Modus erhalten wird, um das ausgewählte Bild zu erreichen, wenn es sich um ein ausgewähltes Hochfrequenzbild handelt, wobei diese Anzahl um eins erhöht wird, wenn es sich um ein ausgewähltes Niedrigfrequenzbild (L) handelt.

3. Verfahren nach Anspruch 1, **dadurch gekennzeichnet, dass** es für die Berechnung eines Hochfrequenzbildes H von einer bestimmten Zeitebene eine zeitliche Filterung zwischen dem aktuellen Bild B und einem Folgebild C (16) des nachfolgenden Bildpaares von der gleichen Zeitebene umfasst, wenn die Korrelation zwischen dem aktuellen Bild und dem vorhergehenden Bild unter einer Schwelle (10) liegt und wenn die Korrelation zwischen dem aktuellen Bild und diesem Folgebild über einer Schwelle (15) liegt, wobei das Niedrigfrequenzbild L der bestimmten Zeitebene nach dem Intra-Modus (16) erhalten wird.

4. Verfahren nach Anspruch 1, **dadurch gekennzeichnet, dass** es jedem Bild der Bildgruppe eine Bildnummer s zuweist, dadurch, dass es eine Nachverfolgung dieser nummerierten Bilder während der Zerlegung vornimmt, indem für jede Nummer ein Zähler zugeteilt wird, wobei der Zähler, aktueller Zähler genannt, der dem Bild mit Nummer s für eine aktuelle Zerlegungsebene zugeteilt wird, wie folgt berechnet wird:

- der besagte aktuelle Zähler wird durch Inkrementation des Zählers berechnet, der dem Bild mit Nummer s der vorhergehenden Zerlegungsebene zugewiesen wurde, wenn ein Niedrigfrequenzbild (L) mit Nummer s nach dem Intra-Modus erhalten wird,

- der besagte aktuelle Zähler ist unverändert, wenn ein Hochfrequenzbild (H) mit Nummer s nach dem Intra-Modus oder durch zeitliche Filterung mit einem Folgebild ein erhalten wird,

- der der Nummer s zugewiesene Zähler wird jedes Mal dann auf null zurückgesetzt, wenn ein Bild mit Nummer s durch bewegungskompensierte zeitliche Filterung des besagten Bildes mit Nummer s der vorhergehenden Zerlegungsebene mit einem vorhergehenden Bild erhalten wird,

wobei die umgekehrten Schritte entsprechend dem Wert der Zähler durchgeführt werden.

5. Verfahren nach Anspruch 1, **dadurch gekennzeichnet, dass** die Hochfrequenzbilder H und Niedrigfrequenzbilder L während der bewegungskompensierten zeitlichen Filterung von zwei aufeinanderfolgenden Bildern A und B anhand der folgenden Berechnungen erhalten werden:

$$\begin{cases} H = \dfrac{B - MC_{A \leftarrow B}(A)}{\sqrt{2}} \\ L = \sqrt{2}.A + MC_{A \leftarrow B}^{-1}(H) \end{cases}$$

wobei MC der Bewegungskompensation nach dem Vektorfeld von B nach A, des Bildes A oder H, entspricht,

und dadurch, dass die Bilder L und H, wenn das aktuelle Bild B einen Korrelationsgrad mit dem besagten Bild A unterhalb einer Schwelle hat, nach dem Intra-Modus nach den folgenden Formeln erhalten werden:

$$\begin{cases} H = B \\ L = \sqrt{2}.A \end{cases}$$

6. Verfahren nach Anspruch 3, **dadurch gekennzeichnet, dass** die Bilder H und L von dem aktuellen Bild B und einem auf B folgenden Bild C derselben Zeitebene erhalten werden, wenn die Korrelation zwischen dem aktuellen Bild und dem besagten Folgebild über einer Schwelle liegt, nach den folgenden Formeln:

wobei:

$$\begin{cases} H = \dfrac{B - MC_{B \rightarrow C}(C)}{\sqrt{2}} \\ L = \sqrt{2}.A \end{cases}$$

Bewegungskompensation des Bildes C nach dem Vektorfeld von B nach C entspricht.

7. Verfahren nach Anspruch 1, **dadurch gekennzeichnet, dass** die durch zeitliche Analyse (1) erhaltenen kalibrierten Bilder anschließend durch räumliche Analyse (3) verarbeitet werden.

8. Verfahren nach Anspruch 1, **dadurch gekennzeichnet, dass** der Korrelationsgrad berechnet wird, indem die Anzahl in Verbindung stehender Pixel, das heißt, durch einen Bewegungsvektor verbundener Pixel, berücksichtigt wird.

9. Verfahren zum Decodieren einer Sequenz codierter Bilder nach dem Verfahren des Anspruchs 1 in einem Strom, **dadurch gekennzeichnet, dass** es einen entropischen Decodierungsschritt (18) umfasst, um Filtermodi und Wavelet-Koeffizienten zu decodieren, einen Schritt zum Decodieren von Bewegungsinformationen, eine räumliche Synthese (20) anhand der besagten Wavelet-Koeffizienten, um Bilder von niedriger Zeitfrequenz und Bilder von hoher Zeitfrequenz mit unterschiedlichen zeitlichen Zerlegungsgraden zu erhalten, mindestens einen Skalierungsschritt für Bilder, die unter den Hochfrequenzbildern und Niedrigfrequenzbildern ausgewählt wurden, und ein zeitlicher Syntheseschritt (21) in Abhängigkeit von den besagten decodierten Filtermodi und den besagten decodierten Bewegungsinformationen von den Hochfrequenzbildern und Niedrigfrequenzbildern nach Skalierung, **dadurch gekennzeichnet, dass** die besagte Skalierung die folgenden Schritte umfasst:

- Auswahl der erhaltenen Bilder mit niedriger Zeitfrequenz (L) und hoher Zeitfrequenz (H), während des Codierungsverfahrens des Anspruchs 1, von einem Bild des unteren Zerlegungsgrades nach dem Intra-Modus des besagten Codierungsverfahren des Anspruchs 1, mit der zusätzlichen Bedingung für die Hochfrequenzbilder, dass dieses Bild selbst aus dem besagten Intra-Modus stammt;
- Skalierung der ausgewählten Bilder, indem mindestens ein umgekehrter Schritt des durch das Codierungsverfahren vorgenommenen Schrittes einer erneuten Skalierung durchgeführt wird.

10. Verfahren nach Anspruch 9, **dadurch gekennzeichnet, dass** die Anzahl durchgeführter umgekehrter Schritte der Anzahl von aufeinanderfolgenden Malen entspricht, wo ein Niedrigfrequenzbild (L) nach dem Intra-Modus erhalten wird, um das ausgewählte Bild zu erreichen, wenn es sich um ein ausgewähltes Hochfrequenzbild handelt, wobei diese Anzahl um Eins erhöht wird, wenn es sich um ein ausgewähltes Niedrigfrequenzbild (L) handelt.

**Claims**

1. Method for coding a picture sequence comprising a hierarchical temporal analysis (1) of a group of pictures performing a motion compensated temporal filtering of successive pairs of pictures (11) to supply low temporal frequency pictures and high temporal frequency pictures at different temporal decomposition levels, this analysis realising, for a given temporal decomposition level and for a pair of low temporal frequency pictures, a motion estimation step (8) of a current picture B to a previous reference picture A to supply motion vectors then a motion compensated temporal filtering (11), called filtering in MCTF mode, of said pictures A and B to supply a low temporal frequency picture (L) and a high temporal frequency picture (H) of a greater decomposition level, said method comprising the following step:

- if the current picture B has a level of correlation with said previous picture A lower than a threshold (10, 15), replacing said temporal filtering with an intra mode defined such that the high frequency picture is equal to picture B and the low frequency picture is equal to picture A or vice versa, said low frequency picture (L) obtained being thus scaled, during a first scaling step, to be adapted, at the energy level, to the pictures obtained by said motion compensated temporal filtering, said method being **characterised in that**, from among the low frequency picture and the final high frequency decomposed pictures obtained at the end of the analysis:
- it selects the low (L) and high (H) frequency pictures obtained according to the intra mode from a picture of the lower decomposition level with the additional condition, for the high frequency pictures, that this picture has been obtained according to the intra mode;
- it rescales the pictures selected by carrying out at least one reverse step of the first scaling step, for their coding.

2. Method according to claim 1, **characterised in that** the number of reverse steps carried out corresponds to the number of successive times where a low frequency picture (L) is obtained according to the intra mode to arrive at the picture selected if this involves a high frequency selected picture, this number being incremented by one if it involves a low frequency selected picture (L).

3. Method according to claim 1, **characterised in that** it comprises, for the calculation of a high frequency picture H of a given temporal level, a temporal filtering between the current picture B and a following picture C (16) of the following pair of pictures of the same temporal level, if the correlation between the current picture and the previous picture is lower than a threshold (10) and if the correlation between the current picture and this following picture is greater than a threshold (15), the low frequency picture L of the given temporal level being obtained according to the intra mode (16).

4. Method according to claim 1, **characterised in that** it assigns a picture number s to each picture of the group of pictures, and **in that** it monitors these numbered pictures during the decomposition by attributing a counter for each number, the counter, called the current counter, attributed to the picture of number s for a current decomposition level being calculated as follows:

- said current counter is calculated by incrementing the counter assigned to the picture of number s of the previous decomposition level when a low frequency picture (L) of number s is obtained according to the intra mode,
- said current counter remains unchanged when a high frequency picture (H) of number s is obtained according to the intra mode or by a temporal filtering with a following picture,
- the counter attributed to number s is reset each time a picture of number s is obtained by motion compensated temporal filtering of said picture of number s of the previous decomposition level with a previous picture,
the reverse steps being carried out according to the value of the counters.

5. Method according to claim 1, **characterised in that** the high frequency pictures H and low frequency pictures L are obtained, during the motion compensated temporal filtering of two successive pictures A and B, from the following operations:

$$\begin{cases} H = \dfrac{B - MC_{A \leftarrow B}(A)}{\sqrt{2}} \\ L = \sqrt{2}.A + MC_{A \leftarrow B}^{-1}(H) \end{cases}$$

MC corresponding to the motion compensation according to the B to A motion vector field, of the picture A or H.

and **in that** the pictures L and H are obtained if the current picture B has a level of correlation with said picture A lower than a threshold, according to the intra mode by the following formulas:

$$\begin{cases} H = B \\ L = \sqrt{2}.A \end{cases}$$

6. Method according to claim 3, **characterised in that** the pictures H and L are obtained from the current picture B and a picture C after B of the same temporal level if the correlation between the current picture and said following picture is greater than a threshold according to the following formulas:

$$\begin{cases} H = \dfrac{B - MC_{B \rightarrow C}(C)}{\sqrt{2}} \\ L = \sqrt{2}.A \end{cases}$$

MC corresponding to the motion compensation of the picture C according to the B to C vector field.

7. Method according to claim 1, **characterised in that** the calibrated pictures obtained by temporal analysis (1) are then processed by spatial analysis (3).

8. Method according to claim 1, **characterised in that** the level of correlation is calculated by taking into account the number of connected pixels, that is, connected by a motion vector.

9. Method for decoding a sequence of pictures coded according to the method of claim 1 into a stream, **characterised in that** it comprises an entropic decoding step (18) for decoding filtering modes and wavelet coefficients, a step of decoding motion information, a spatial synthesis (20) using said wavelet coefficients to obtain low temporal frequency pictures and high temporal frequency pictures at different levels of temporal decomposition, at least one scaling step for pictures selected from among the high frequency and low frequency pictures and a step of temporal synthesis (21) according to said decoded filtering modes and said decoded motion information using high frequency and low frequency pictures after scaling, **characterised in that** said scaling comprises the following steps:

- selecting the low (L) and high (H) temporal frequency pictures obtained, during the coding method of claim 1, from a picture of the lower decomposition level according to the intra mode of said coding method of claim 1, with the additional condition, for the high frequency pictures, that this picture is derived itself from said intra mode;
- scaling the pictures selected by carrying out at least one reverse step of the rescaling step carried out by the coding method.

10. Method according to claim 9, **characterised in that** the number of reverse steps carried out corresponds to the number of successive times where a low frequency picture (L) is obtained according to the intra mode to arrive at the picture selected if this involves a high frequency selected picture, this number being incremented by one if it involves a low frequency selected picture (L).

**FIG.1**

**FIG.2**

FIG.3

FIG.5

Figure 4 corrigée

Images A et B — 7

↓

Estimation de mouvement de B vers A — 8

↓

Calcul du pourcentage P1 de pixels non connectés — 9

↓

P1>S1 ? — 10

oui ←  → non

∃ C ? — 12

— 11

$$\begin{cases} H = \dfrac{B - MC_{A \leftarrow B}(A)}{\sqrt{2}} \\ L = \sqrt{2}.A + MC_{A \leftarrow B}^{-1}(H) \end{cases}$$

oui

↓

Estimation de mouvement de B vers C — 13

↓

Calcul du pourcentage P2 de pixels non connectés — 14

↓

P2>S2 ? — 15

oui →

non

↓

— 16

$$\begin{cases} H = \dfrac{B - MC_{B \rightarrow C}(C)}{\sqrt{2}} \\ L = \sqrt{2}.A \end{cases}$$

— 17

$$\begin{cases} H = B \\ L = \sqrt{2}.A \end{cases}$$

**Fig. 4**

**EP 1 721 470 B1**

## RÉFÉRENCES CITÉES DANS LA DESCRIPTION

**Documents brevets cités dans la description**

- US 20040008785 A